# EUROPÄISCHE PATENTSCHRIFT

(11) **EP 0 209 687 B1**
(45) Veröffentlichungstag und Bekanntmachung des Hinweises auf die Patenterteilung: **01.09.1993**
(21) Anmeldenummer: 86107564.6
(22) Anmeldetag: 04.06.1986
(51) Int. Cl.: H04M 1/65

(54) **Anrufbeantworter**
Telephone answering device
Répondeur téléphonique

(30) Priorität: 13.07.1985 DE 3525127
(43) Veröffentlichungstag der Anmeldung: 28.01.1987
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Emmert, Reinhold, Ing. grad., D-8510 Fürth (DE)

(56) Entgegenhaltungen:
- DE-A- 2 749 948
- GB-A- 2 143 705
- US-A- 4 301 480
- PATENT ABSTRACTS OF JAPAN, Band 6, Nr. 128 (E-118)[1006], 14. Juli 1982 & JP-A-57 54 458
- NACHRICHTEN TECHNISCHE ZEITSCHRIFT, Band 38, Heft 5, Mai 1985, Seite 355, Berlin, DE; "Verständliche Sprache im 'Schnellgang'"
- PATENT ABSTRACTS OF JAPAN, Band 6, Nr. 132 (E-119)[1010], 17. Juli 1982 & JP-A-57 57 063
- FUNKSCHAU, Band 49, Nr. 18, August 1977, Seiten 847-851, München, DE; "Trotz veränderter Geschwindigkeit: Gleiche Tonhöhe"

## Beschreibung

Die Erfindung betrifft einen Anrufbeantworter mit einem Textspeicher für eingehende Nachrichten sowie einer Einrichtung zu deren Fernabfrage.

Derartige Anrufbeantworter sind allgemein bekannt. Sie weisen jedoch noch einige entscheidende Nachteile auf. Anrufer, die über einen Anrufbeantworter zur Besprechung eines Bandes aufgefordert werden, sind nämlich häufig verunsichert und daher nicht in der Lage, ihr Anliegen schnell und präzise zu formulieren. Für den Betreiber des Anrufbeantworters ist es somit oft langwierig, die während seiner Abwesenheit aufgezeichneten Nachrichten abzuhören. Bei einer Fernabfrage ist dieser Prozeß außerdem noch mit hohen Telefongebühren verbunden.

Aus den japanischen Patentanmeldungen JP-A-57 54 458 oder JP-A-57 57 063 ist es für Anrufbeantworter bekannt, im Falle einer Fernabfrage den Lesevorgang für die Wiedergabe der aufgezeichneten Nachrichten mit einer höheren Geschwindigkeit ablaufen zu lassen als den ursprünglichen Schreibvorgang. Das Verhältnis von Schreib- und Lesegeschwindigkeit ist durch Codewörter fernsteuerbar.

Aus der Zeitschrift Funkschau, Band 49, Nr. 18, August 1977, Seiten 847 bis 851, ist auf dem technischen Fachgebiet für Tonbandgeräte ein Zusatzgerät bekannt. Das Zusatzgerät steuert den Antrieb der Tonbandmaschine zur Zeitraffung/Zeitdehnung derart, daß trotz veränderter Geschwindigkeit ("Herausschneiden" bzw. Einfügen" von Signalteilen) die Originaltonhöhe erhalten bleibt.

Aus dem amerikanischen Patent US-A-4 301 480 ist eine Einrichtung bekannt, die Aufzeichnungen, deren Amplitude unterhalb eines Schwellwertes liegt, schnell wiedergibt und Aufzeichnungen, deren Amplitude oberhalb eines Schwellwertes liegt, mit der Aufzeichnungsgeschwindigkeit wiedergibt. Dadurch wird eine Pausenreduzierung erzielt und die eigentliche Nachricht mit unveränderter Tonhöhe wiedergegeben.

Der Erfindung liegt die Aufgabe Zugrunde, einen Anrufbeantworter der im Oberbegriff des Anspruchs 1 angegebenen Art so auszubilden, daß die genannten Nachteile beseitigt werden.

Diese Aufgabe wird gemäß der Erfindung durch die im Kennzeichen des Anspruchs 1 angegebenen Maßnahmen gelöst. Vorteilhafte Weiterbildungen der Erfindung sind in den Unteransprüchen gekennzeichnet.

Bei dem Anrufbeantworter gemäß der Erfindung ist zur Steuerung des Textspeichers in vorteilhafter Weise ein Schaltkreis vorgesehen, der im Falle einer Fernabfrage den Lesevorgang für die Wiedergabe der aufgezeichneten Nachrichten mit einer höheren Geschwindigkeit ablaufen läßt als den ursprünglichen Schreibvorgang. Hierdurch ist es möglich, die aufgezeichneten Nachrichten bei ihrer Wiedergabe zeitlich zu komprimieren, wobei der Kompressionsfaktor, also das Verhältnis von Schreib- zu Lesegeschwindigkeit in vorteilhafter Weise ferngesteuert durch Übertragung verschiedener Codewörter einstellbar ist. Damit die wiederzugebenden Nachrichten verständlich bleiben, verfügt der Anrufbeantworter gemäß der Erfindung noch über eine an sich bekannte Prozessorschaltung, die die durch die höhere Lesegeschwindigkeit bedingte Tonhöhenänderung ausgleicht. Bevorzugt wird hierzu ein sognenannter VSC- (Variable-Speech-Control-) Prozessor verwendet, wie er zum Beispiel in der Zeitschrift "ntz", Band 38 (1985), Heft 5, Seite 355 beschrieben ist.

Der Anrufbeantworter gemäß der Erfindung ermöglicht somit bei einem als Magnetbandgerät mit steuerbarem Bandantrieb ausgebildeten Textspeicher einen Ausgleich von Tonhöhenänderungen in der ausgegebenen Nachricht, die aufgrund unterschiedlicher Aufzeichnungs- und Wiedergabegeschwindigkeiten entstehen. Dadurch wird eine bessere Verständlichkeit der Nachricht erreicht. Ein entscheidender Vorteil liegt außerdem im Zurücksetzen des Textspeichers um einige Sekunden bei einem Wechsel des Verhältnisses von Lesegeschwindigkeit zu Schreibgeschindigkeit, um den zuletzt zeitlich komprimiert gehörten Abschnitt noch einmal in Realzeit wiederzugeben. Hiermit wird verhindert, daß bei einer unerwarteten und starken Zunahme des Informationsflusses (Nachricht wurde vom Anrufer unerwartet zügig aufgesprochen) Teile der Information nicht verstanden oder einfach überhört werden. Entsprechendes gilt auch allgemein für den Fall, bei dem nicht speziell auf Normalgeschwindigkeit, sondern ganz allgemein von einem höheren auf einen niedrigeren Kompressionsfaktor umgeschaltet wird.

Eine andere, aber ebenso vorteilhafte Ausführungsform gemäß Anspruch 2 arbeitet mit einem Festkörperspeicher, bei dem zur Steuerung der Geschwindigkeit des Schreib- und Lesevorgangs kein aufwendiger Motor- bzw. Drehzahlreglerkreis, sondern lediglich ein frequenzvariabler Taktgenerator erforderlich ist.

## Patentansprüche

1. Anrufbeantworter mit einem Textspeicher für eingehende Nachrichten, mit einer Einrichtung zu deren Fernabfrage und mit einem Schaltkeis zur Steuerung des Textspeichers, der im Falle einer Fernabfrage den Lesevorgang für die Wiedergabe der aufgezeichneten Nachricht mit einer höheren Geschwindigkeit ablaufen läßt als den ursprünglichen Schreibvorgang, wobei ferngesteuert durch die Übertragung verschiedener Codewörter das Verhältnis von Lesegeschwindigkeit zur Schreibgeschwindigkeit einstellbar ist,
**dadurch gekennzeichnet,** daß zum Ausgleich der durch unterschiedliche Schreib- und Lesegeschwindigkeit bedingten Tonhöhenänderung in der wiederzugebenden Nachricht eine Prozessorschaltung vorgesehen ist, daß der Textspeicher als Magnetbandgerät mit steuerbarem Bandantrieb ausgebildet ist und daß beim Umschalten des Verhältnisses von Lesegeschwindigkeit zu Schreibgeschwindigkeit von einem großen auf einen kleineren Wert der Textspeicher einige Sekunden zurückgesetzt wird.

2. Anrufbeantworter nach Anspruch 1,
**dadurch gekennzeichnet,** daß der Textspeicher als Festkörperspeicher ausgebildet ist und von einem Taktgenerator mit umschaltbarer Taktfrequenz gesteuert wird.

## Claims

1. Answering machine with a text memory for incoming messages, having a device for remotely accessing these and having a circuit for controlling the text memory, which, in the case of a remote access, allows the read process for replaying the recorded message to run at a higher speed than the original write process, the ratio between read speed and write speed being adjustable remotely controlled by the transmission of various code words, characterised in that a processor circuit is provided for compensating for the change in the pitch of the sound in the message to be replayed due to a different write and read speed, in that the text memory is constructed as a tape recorder with controllable tape drive, and in that the text memory is set back a few seconds when the ratio between read speed and write speed is switched from a large value to a smaller value.

2. Answering machine according to Claim 1, characterised in that the text memory is constructed as a solid-state memory and is controlled by a clock generator with switchable clock frequency.

## Revendications

1. Répondeur téléphonique comportant une mémoire de textes pour des informations arrivantes, un dispositif pour l'interrogation à distance de ces informations et un circuit pour commander la mémoire de textes et qui, dans le cas d'une interrogation à distance, déclenche l'opération de lecture pour la reproduction de l'information enregistrée, avec une vitesse supérieure à celle de l'opération initiale d'enregistrement, le rapport de la vitesse de lecture à la vitesse d'enregistrement étant réglable, d'une manière télécommandée, par la transmission de différents mots de code,
caractérisé en ce que pour la compensation de la modification de la hauteur du son, qui est due à des vitesses différentes d'enregistrement et de lecture, dans l'information devant être reproduite, il est prévu un circuit formant processeur, que la mémoire de textes est agencée sous la forme d'un magnétophone avec un entraînement commandable de la bande et que, lors de la commutation du rapport de la vitesse de lecture à la vitesse d'enregistrement d'une valeur élevée à une faible valeur, la mémoire de textes est remise à zéro pendant quelques secondes.

2. Répondeur téléphonique selon la revendication 1, caractérisé en ce que la mémoire de textes est réalisée sous la forme d'une mémoire morte et est commandée par un générateur de cadence possédant une fréquence de cadence commutable.
